# EUROPEAN PATENT SPECIFICATION

(11) **EP 3 920 109 B1**
(45) Date of publication and mention of the grant of the patent: **29.04.2026**
(21) Application number: 19914157.3
(22) Date of filing: 26.12.2019
(51) Int. Cl.: G05B 19/04, F24F 11/56, G06Q 10/00, F24F 11/64, F24F 11/32, F24F 11/50, F24F 11/58, F24F 120/10, F24F 130/10

(54) **SERVICING PROPOSAL PERIOD ADJUSTMENT DEVICE AND AIR CONDITIONING SYSTEM**
VORRICHTUNG ZUR EINSTELLUNG DES WARTUNGSVORSCHLAGSZEITRAUMS UND KLIMAANLAGE
DISPOSITIF DE RÉGLAGE DE PÉRIODE DE PROPOSITION D'ENTRETIEN ET SYSTÈME DE CLIMATISATION

(30) Priority: 31.01.2019 JP 2019016014
(43) Date of publication of application: 08.12.2021
(73) Proprietor: Fujitsu General Limited, Kawasaki-shi, Kanagawa 213-8502 (JP)
(72) Inventor: ISHIZAKI, Jyunya, Kawasaki-shi, Kanagawa 213-8502 (JP)
(74) Representative: TBK
(86) International application number: PCT/JP2019/051319
(87) International publication number: WO 2020/158291

(56) References cited:
- WO-A1-2015/111101
- JP-A- 2003 022 331
- JP-A- 2013 242 774
- JP-A- 2013 242 774
- JP-A- 2015 023 497
- JP-A- 2016 195 327
- JP-A- 2018 032 398
- US-A1- 2015 295 803
- US-A1- 2016 012 397

## Description

### Field

The present invention relates to a service proposal period adjusting device and an air conditioning system.

### Background

There is a known air conditioner that sends the time of filter care, the time of replacement, or the like to a mobile terminal (Patent Literature 1). Furthermore, there is a known air conditioning system in which information related to an air conditioning apparatus is automatically extracted and sent to a customer management center and then the customer management center automatically sends information that is in accordance with the sent content back to the air conditioning apparatus (Patent Literature 2).

### Citation List

### Patent Literature

Patent Literature 1: Japanese Laid-open Patent Publication No. 2016-87510
Patent Literature 2: Japanese Laid-open Patent Publication No. 2007-218567

Document US 2016/012397 A1 discloses a method for a communication device connectable to an information management system that makes a visit appointment with a service person. The communication device stores schedule information of a user of the communication device. The method causes a computer of the communication device to: display data which is generated using the schedule information and which includes a calendar; access the information management system to acquire candidate data indicating possible visit dates/times of the service person; determine candidate visit dates/times of the service person by excluding dates on which plans of the user are included in the schedule information, from the possible visit dates/times of the service person; display each display representing each of candidate visit times/times within each region corresponding to each day in the calendar; and display an appointment screen which sets one candidate visit date/time as a visit date/time of the service person.

Document JP 2013 242774 A discloses a maintenance work schedule preparation device capable of preparing a work schedule for efficiently making rounds of buildings and performing maintenance work of facility apparatuses.

### Summary

### Technical Problem

There is a known service base location that provides various services related to an air conditioner, such as installation of the air conditioner, repair of the air conditioner, and cleaning of the air conditioner. Furthermore, a technique for notifying a user of a message urging to clean the air conditioner at a predetermined timing has been proposed. According to this message, the user can request the service base location to clean the air conditioner at an appropriate timing. However, the user generally attends the service, such as cleaning of the air conditioner, performed by the service base location, and, at this time, the user needs to submit a plurality of time zones in which the user is at home to the service base location, whereby there is a problem in that it takes time to request the cleaning.

Accordingly, the disclosed technology has been conceived in light of the circumstances described above and an object thereof is to provide a service proposal period adjusting device and an air conditioning system that allows the user to easily request the service to the service base location.

### Solution to Problem

According to an aspect of the present invention there is provided a service proposal period adjusting device as defined in claim 1. According to another aspect of the present invention, there is provided an air conditioning system as defined in claim 5. Further aspects of the present invention are set out in the dependent claims.

### Advantageous Effects of Invention

The disclosed service proposal period adjusting device can allow the user to easily request the service to the service base location.

### Brief Description of Drawings

FIG. 1 is a diagram illustrating an example of an air conditioning system according to an embodiment.
FIG. 2 is a block diagram illustrating an example of a hardware configuration of an adapter.
FIG. 3 is a block diagram illustrating an air conditioner.
FIG. 4 is a block diagram illustrating a server device.
FIG. 5 is a diagram illustrating a candidate date and time calculation table.
FIG. 6 is a plan view illustrating a communication terminal.
FIG. 7 is a plan view illustrating a communication terminal in which a second request date and time selection screen is displayed on a display unit.
FIG. 8 is a flowchart illustrating the flow of an operation for requesting cleaning to a service base location.

### Description of Embodiments

Preferred embodiments of a service proposal period adjusting device and an air conditioning system disclosed in the present invention will be explained with reference to accompanying drawings. Furthermore, the disclosed technology is not limited to the description below. Furthermore, in the description below, overlapping description will be omitted by assigning the same reference numerals to the same components. Furthermore, in the embodiment, a description will be given by using cleaning of an air conditioner as an example of a service provided by a service base location.

### [Embodiment]

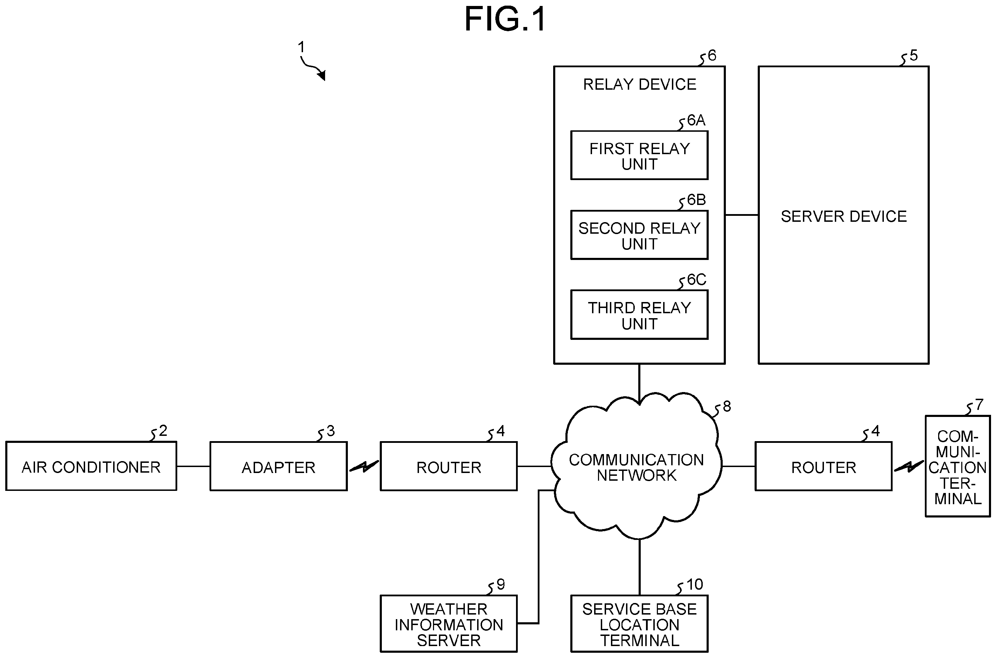

FIG. 1 is a diagram illustrating an example of an air conditioning system 1 according to an embodiment. The air conditioning system 1 illustrated in FIG. 1 includes an air conditioner 2, an adapter 3, a router 4, a server device 5, a relay device 6, a communication terminal 7, a communication network 8, a weather information server 9, and a service base location terminal 10.

The air conditioner 2 is a device that cools and heats inside a room. A plurality of this type of the air conditioners 2 is provided in the air conditioning system 1. The communication terminal 7 is a terminal device, such as a smartphone, held by a user. A plurality of the communication terminals 7 is provided in the air conditioning system 1, and the plurality of the communication terminals 7 is associated with the plurality of the air conditioners provided in the air conditioning system 1.

The adapter 3 has a communication function for connecting the air conditioner 2 and the router 4 by wireless communication and a control function for controlling the air conditioner 2 by using Artificial Intelligence (AI). The adapter 3 is provided in each of the air conditioners 2. The router 4 is a device that connects the adapter 3 and the communication network 8 by wireless communication by using, for example, a wireless local area network (WLAN), or the like. The communication network 8 is a communication network, such as the Internet. The server device 5 is an example of a service proposal period adjusting device, has a function for generating a learning model of AI that controls the air conditioner 2, and has a database or the like that stores therein operation history data or the like. Furthermore, the server device 5 is arranged in, for example, a data center. The relay device 6 is connected to the communication network 8 in communication and has a function for connecting to the server device 5 in communication. The relay device 6 sends, from the adapter 3 to the server device 5, operation history data or the like that is used to generate or update the learning model applied to the air conditioner 2 through the communication network 8. Furthermore, the relay device 6 sends the learning model that has been generated or updated by the server device 5 to the adapter 3 through the communication network 8. Furthermore, the relay device 6 is arranged in, for example, the data center or the like.

The relay device 6 includes a first relay unit 6A, a second relay unit 6B, and a third relay unit 6C. The first relay unit 6A sends, to the server device 5 through the communication network 8, the operation history data or the like that is used to generate or update the learning model received from the adapter 3, and sends the learning model generated or updated by the server device 5 to the adapter 3 through the communication network 8. The second relay unit 6B acquires, through the communication network 8, an operation condition (an operation mode, such as a cooling/heating mode, a set temperature, etc.) of the air conditioner 2 that has been set by the user from outside by using the communication terminal 7, and then, sends the acquired operation condition to the air conditioner 2 through the communication network 8. The third relay unit 6C acquires external data, such as a weather report, from, for example, the communication network 8, such as the Internet, and then, sends the acquired external data to the server device 5. Furthermore, the third relay unit 6C sends the external data to the adapter 3 through the communication network 8.

The weather information server 9 exhibits, to the public, a weather forecast to an information processing apparatus connected to the communication network 8. The weather forecast includes weather data in a plurality of time zones in each of a plurality of regions. For example, the weather data in a certain time zone in a certain region is each of forecasts of the weather, an air temperature, and a probability of rainfall in the subject time zone in the subject region. The service base location terminal 10 is installed in the service base location that provides various services related to the air conditioner, such as installation of the air conditioner, repair of the air conditioner, and cleaning of the air conditioner. Incidentally, the service base location provides these various services to the user of the air conditioner 2; however, the service base location may also be replaced by a service base location that provides a single service. For example, the service base location may also be replaced by the a service base location that exclusively provides repairs of air conditioners or may also be replaced by a service base location that exclusively provides cleaning of air conditioners. The service base location terminal 10 receives an input of a working state of the service base location and intermittently sends a signal indicating the working state of the service base location (hereinafter, referred to as a "working state signal") to the server device 5 through the communication network 8. The working state is an implementation schedule of the various services provided by the service base location on each day and at least one working state is associated with each of a plurality of pieces of date and time. For example, the working state related to cleaning of an air conditioner indicates whether or not the service base location has a remaining capacity to accept to clean the air conditioner on that date and time.

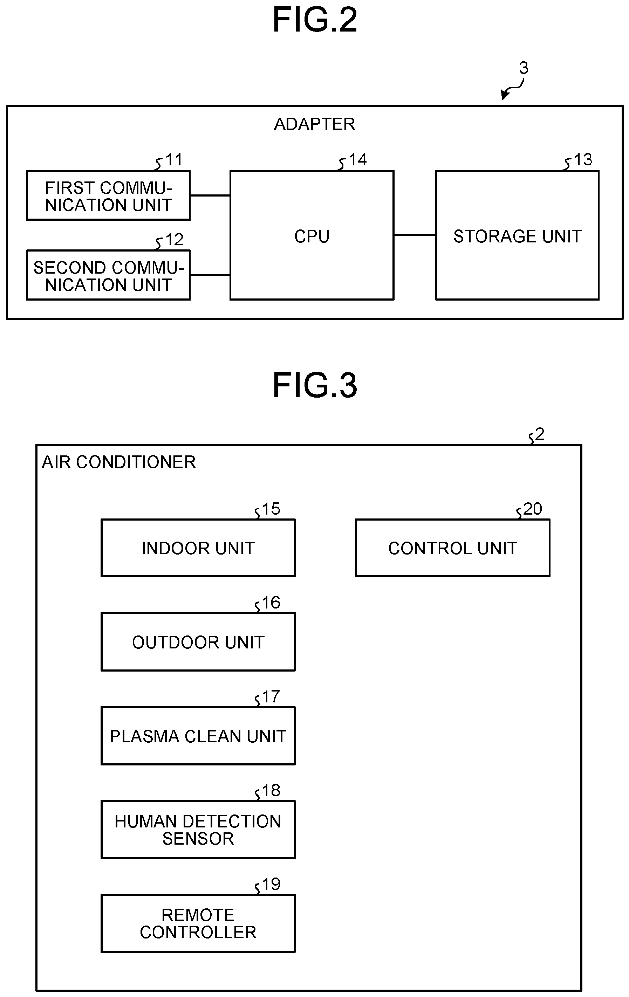

FIG. 2 is a block diagram illustrating an example of a hardware configuration of the adapter 3. The adapter 3 illustrated in FIG. 2 includes a first communication unit 11, a second communication unit 12, a storage unit 13, and a central processing unit (CPU) 14. The first communication unit 11 is a communication interface (IF), such as a universal asynchronous receiver transmitter (UART), that performs a communication connection with the air conditioner 2. The second communication unit 12 is a communication unit of, for example, a communication IF, such as a WLAN, that performs a communication connection with the router 4. The storage unit 13 includes, for example, a read only memory (ROM), a random access memory (RAM), or the like and stores various kinds of information, such as data and programs. The CPU 14 performs overall control of the adapter 3.

FIG. 3 is a block diagram illustrating the air conditioner 2. The air conditioner 2 includes, as illustrated in FIG. 3, an indoor unit 15, an outdoor unit 16, a plasma clean unit 17, a human detection sensor 18, a remote controller 19, and a control unit 20. The indoor unit 15 is arranged inside a room and includes an indoor fan, a filter, a filter cleaning mechanism, and an indoor heat exchanger, which are not illustrated. The indoor fan takes in air inside the room in which the indoor unit 15 is arranged, allows the air to pass through the indoor heat exchanger, and blows out the air that has passed through the indoor heat exchanger. The filter captures dust from the air passing through the indoor heat exchanger. The filter cleaning mechanism removes the dust captured by the filter from the filter. The indoor heat exchanger heats or cools the air inside the room by performing heat exchange between a refrigerant that circulates among the outdoor unit 16 and the air taken in by the indoor fan. The indoor unit 15 heats, cools, or dehumidifies inside the room by the indoor heat exchanger heating or cooling the air inside the room.

The outdoor unit 16 is arranged outside the room and includes an outdoor fan, an outdoor heat exchanger, a compressor, and an expansion valve, which are not illustrated. The outdoor fan takes in outside air of the outdoor in which the outdoor unit 16 is arranged and allows the air to pass through the outdoor heat exchanger. The outdoor heat exchanger heats or cools the refrigerant by performing heat exchange between the outside air that has been taken in by the outdoor fan and the refrigerant. The compressor circulates the refrigerant between the indoor unit 15 and the outdoor unit 16. The expansion valve adjusts an amount of the refrigerant flowing through the indoor unit 15 by adjusting the degree of opening thereof.

The plasma clean unit 17 is, for example, an electric dust precipitator, is provided in an interior of the indoor unit 15, and includes an ion emission unit and a capturing unit. The ion emission unit charges the dust included in the air taken in by the indoor fan included in the indoor unit 15. The capturing unit includes an electrode plate and absorbs the dust charged by the ion emission unit to the electrode plate by applying a predetermined voltage to the electrode plate. The plasma clean unit 17 cleans up the air taken into the interior of the indoor unit 15 by the indoor fan included in the indoor unit 15 by absorbing the dust to the electrode plate in the capturing unit and cleans up the air in the room. Furthermore, the plasma clean unit 17 measures the voltage of the electrode plate in the capturing unit, and discharge protection for stopping an operation is performed when the voltage is below the predetermined voltage value.

The human detection sensor 18 is provided in the indoor unit 15 and detects whether a person or a pet is present inside the room in which the indoor unit 15 is arranged. The remote controller 19 includes an operating unit and a display unit, which are not illustrated. The remote controller 19 outputs information generated when the operating unit is operated to the control unit 20 and displays, on the display unit, pieces of operation information on the operating unit, various kinds of detection results, such as an indoor temperature, obtained by the sensor, and information generated by the control unit 20 such that the user can recognize these pieces of information and the detection results. Namely, the user can remotely operate the air conditioner 2 by operating the remote controller 19.

The control unit 20 controls the indoor unit 15, the outdoor unit 16, the plasma clean unit 17, and the human detection sensor 18. For example, the control unit 20 controls the indoor unit 15 and the outdoor unit 16 such that, when "heating" is selected by an operation of the remote controller 19, the indoor unit 15 heats inside the room. The control unit 20 controls the indoor unit 15 and the outdoor unit 16 such that, when "cooling" is selected by an operation of the remote controller 19, the indoor unit 15 cools inside the room. The control unit 20 controls the indoor unit 15 and the outdoor unit 16 such that, when "dehumidification" is selected by an operation of the remote controller 19, the indoor unit 15 dehumidifies inside the room. The control unit 20 controls the indoor unit 15 and the outdoor unit 16 such that, when "stop" is selected by an operation of the remote controller 19, the indoor unit 15 stops cooling, heating, or dehumidification.

The adapter 3 intermittently extracts (for example, every 5 minutes) an operation state of the air conditioner 2 from the air conditioner 2. The operation state includes a plurality of set values, such as set temperatures or the volume of air, that are set in the air conditioner 2 and a plurality of pieces of operation data, such as an indoor temperature and an outside air temperature, detected by the air conditioner 2. From among the plurality of pieces of operation data, the operation data associated with certain date and time indicates the state of the air conditioner 2 on that date and time. The adapter 3 collectively and periodically sends (for example, every 48 hours) a working state signal indicating the intermittently extracted operation state to the server device 5 via the communication network 8. Furthermore, the adapter 3 stores the learning model that is periodically (for example, every 48 hours) sent from the server device 5 and instructs the control unit 20 to control the air conditioner 2 based on the learning model.

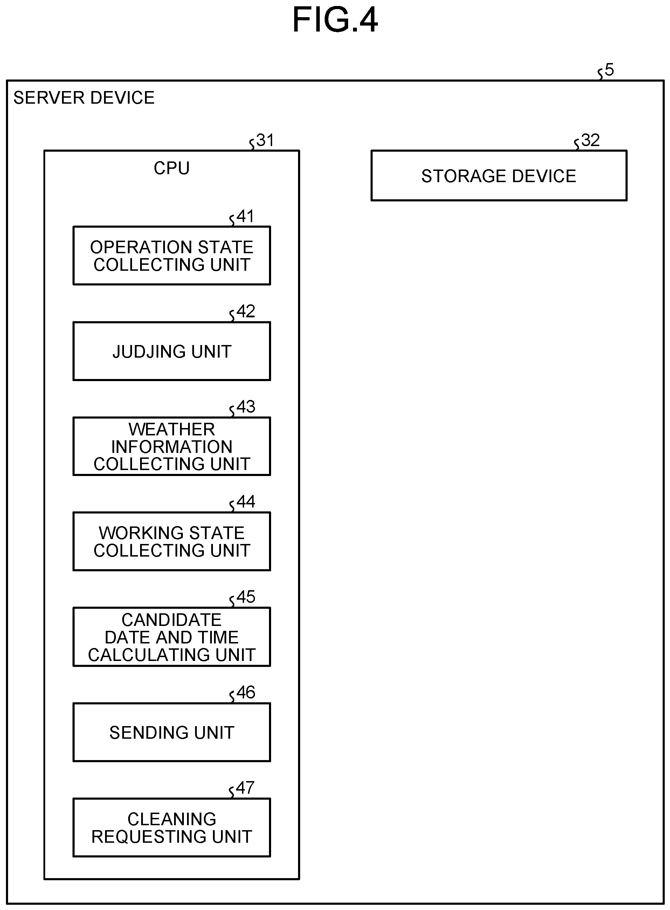

FIG. 4 is a block diagram illustrating the server device 5. The server device 5 is a computer and includes a CPU 31 and a storage device 32. The CPU 31 controls the storage device 32 by performing a computer program installed in the server device 5. The storage device 32 stores therein the computer program installed in the server device 5 and stores therein the information used by the CPU 31.

The computer program installed in the server device 5 is formed of a plurality of computer programs for causing the server device 5 to implement each of a plurality of functions. The server device 5 includes an operation state collecting unit 41, a judging unit 42, a weather information collecting unit 43, a working state collecting unit 44, a candidate date and time calculating unit 45, a sending unit 46, and a cleaning requesting unit 47. The operation state collecting unit 41 collects a plurality of operation state signals sent from each of the plurality of the air conditioners 2 included in the air conditioning system 1 via the communication network 8 and the relay device 6. The operation state collecting unit 41 stores the plurality of collected operation state signals in the storage device 32 by associating the operation state signals with the respective air conditioners.

The judging unit 42 calculates accumulated operation time associated with each of the air conditioners based on the plurality of operation state signals collected by the operation state collecting unit 41. Each of the pieces of accumulated operation time indicates the sum of durations for which each of the air conditioners 2 operates "heating", "cooling", "dehumidification", and "air blowing". A threshold is previously set in the judging unit 42. As the threshold, 2000 hours is exemplified. The judging unit 42 judges whether or not cleaning is needed for each of the plurality of air conditioners based on the plurality of pieces of accumulated operation time and the threshold.

The weather information collecting unit 43 collects weather information from the weather information server 9 via the communication network 8 and the relay device 6. Furthermore, the weather information collecting unit 43 stores the collected pieces of weather information in the storage device 32. The working state collecting unit 44 collects the working state signals sent from the service base location terminal 10 via the communication network 8 and the relay device 6. The working state collecting unit 44 further stores the collected working state signals in the storage device 32.

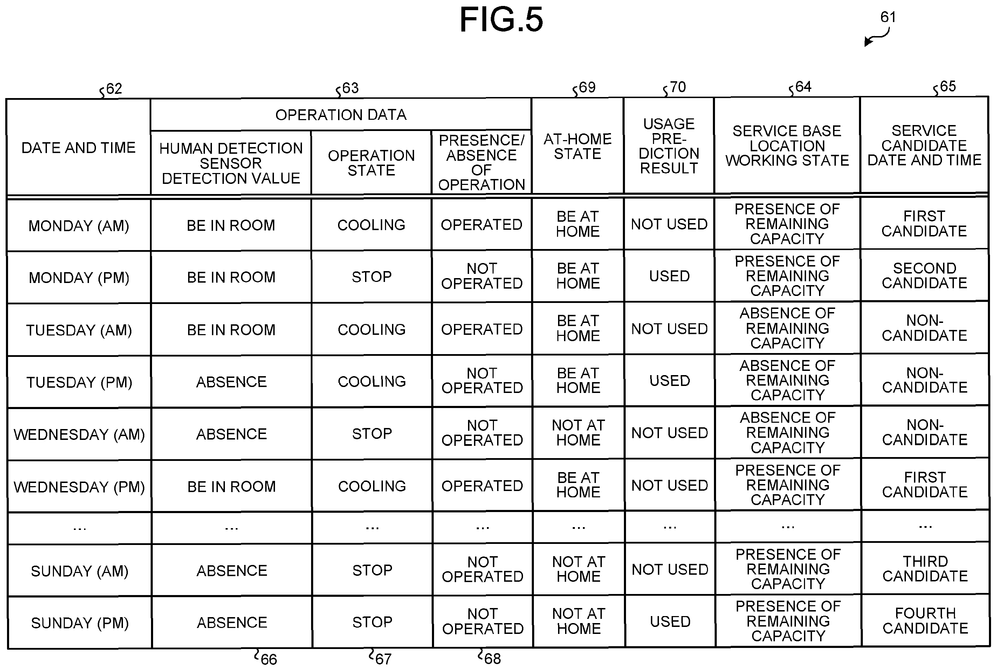

The candidate date and time calculating unit 45 presumes whether or not the user of the air conditioners 2 is at home based on the operation state signals of the air conditioners 2 collected by the operation state collecting unit 41. The candidate date and time calculating unit 45 further presumes whether or not the user of the air conditioners 2 is going to use the air conditioners 2 based on the pieces of weather information collected by the weather information collecting unit 43. The candidate date and time calculating unit 45 further generates a candidate date and time calculation table 61 illustrated in FIG. 5 for each of the plurality of air conditioners based on the plurality of working state signals collected by the working state collecting unit 44. The candidate date and time calculating unit 45 controls the storage device 32 such that the candidate date and time calculation table 61 is stored in the storage device 32.

The sending unit 46 generates a cleaning recommendation signal with respect to the air conditioner 2 when it is judged by the judging unit 42 that the air conditioner 2 needs to be cleaned, and sends the cleaning recommendation signal to the communication terminal 7 via the communication network 8 and the relay device 6. The cleaning requesting unit 47 transfers a cleaning request signal to the service base location terminal 10 via the communication network 8 and the relay device 6 when the cleaning request signal sent from the communication terminal 7 is received.

FIG. 5 is a diagram illustrating the candidate date and time calculation table 61. The candidate date and time calculation table 61 associated with the air conditioner 2 associates a plurality of pieces of date and time 62 with a plurality of pieces of operation data 63, a plurality of at-home states 69, a plurality of usage prediction results 70, a plurality of service base location working states 64, and a plurality of pieces of service candidate date and time 65. The plurality of pieces of the date and time 62 indicates the plurality of pieces of respective date and time indicated by the working state signals of the service base location collected by the working state collecting unit 44 and indicates as, for example, the time zone in the morning and the time zone in the afternoon of every day of the week obtained by dividing one week into each day and further dividing a day into a plurality of time zones. The plurality of pieces of the operation data 63 is operation state signals that are used to determine "service candidate date and time" from among the plurality of operation state signals collected by the operation state collecting unit 41 and is the operation state signals received from the air conditioner 2 from among the plurality of operation state signals.

The operation data associated with a certain time zone included in the plurality of pieces of the operation data 63 indicates the operation data associated with the subject time zone from among the operation states of the air conditioner 2 and indicates a human detection sensor detection value 66, an operation state 67, and a presence/absence of operation 68. The human detection sensor detection value 66 indicates "be in the room" or "absence", indicates the detection result of the subject time zone obtained by the human detection sensor 18 in the air conditioner 2, and indicates whether a person or a pet was present in the room in which the air conditioner 2 is arranged in the subject time zone. The operation state 67 indicates "stop", "heating", "cooling", "dehumidification", or "air blowing", and indicates the state of the air conditioner 2 in the subject time zone. The presence/absence of operation 68 indicates "operated" or "not operated", and indicates whether the remote controller 19 of the air conditioner 2 was operated in the subject time zone.

The plurality of the at-home states 69 included in the candidate date and time calculation table 61 indicates the value presumed by the candidate date and time calculating unit 45 based on the plurality of pieces of the operation data 63 and indicates "be at home" or "not at home". The candidate date and time calculating unit 45 presumes, based on the plurality of pieces of the operation data 63, whether the user of the air conditioner 2 is at home or is not at home regarding each of the plurality of pieces of the date and time 62, and sets the plurality of at-home states 69 to "be at home" or "not at home". For example, the candidate date and time calculating unit 45 presumes that the user of the air conditioner 2 is at home in the time zone in which the operation state 67 indicates other than "stop", and sets the at-home state associated with the subject time zone to "be at home". The candidate date and time calculating unit 45 presumes that the user of the air conditioner 2 is not at home in the time zone in which the human detection sensor detection value 66 indicates "not at home" even in the time zone in which the operation state 67 indicates other than "stop", and sets the at-home state associated with the subject time zone to "not at home". The candidate date and time calculating unit 45 presumes that the user of the air conditioner 2 is at home in the time zone in which the human detection sensor detection value 66 indicates "be in the room", and sets the at-home state associated with the subject time zone to "be at home". The candidate date and time calculating unit 45 further presumes that user of the air conditioner 2 is at home in the time zone in which the presence/absence of operation 68 indicates "operated", and sets the at-home state associated with the subject time zone to "be at home". The candidate date and time calculating unit 45 calculates a plurality of be-at-home time zones presumed that the user is at home based on the above described presumptions. The plurality of be-at-home time zones indicates the time zones in each of which the plurality of at-home states 69 is set to "be at home".

The plurality of usage prediction results 70 included in the candidate date and time calculation table 61 indicates the values presumed by the candidate date and time calculating unit 45 based on the pieces of weather information collected by the weather information collecting unit 43, and is set to be "used" or "not used". Namely, the candidate date and time calculating unit 45 presumes, based on the weather information, whether the user of the air conditioner 2 is highly likely to use the air conditioner 2 regarding each of the plurality of pieces of the date and time 62, and sets each of the plurality of usage prediction results 70 to "used" or "not used". For example, if an air temperature on the certain date and time included in the weather information is a predetermined temperature range, for example, if the air temperature is between 16°C and 25°C, the candidate date and time calculating unit 45 presumes that the possibility that the air conditioner 2 performs a heating operation or a cooling operation in the subject date and time is low, and sets the usage prediction result associated with the subject date and time included in the plurality of the usage prediction results 70 to be "not used". The candidate date and time calculating unit 45 presumes that, when the air temperature in certain date and time indicated by the weather information is out of the predetermined temperature range, the probability that the air conditioner 2 performs the heating operation or the cooling operation in the subject date and time is high, and sets the usage prediction result associated with the subject date and time included in the plurality of usage prediction results 70 to be "used".

The plurality of service base location working states 64 included in the candidate date and time calculation table 61 indicates the working state signals collected by the working state collecting unit 44. The working state associated with certain date and time from among the plurality of service base location working states 64 indicates "presence of remaining capacity" or "absence of remaining capacity", and indicates whether the service base location has a remaining capacity to accept to clean the air conditioner on the subject date and time.

The service candidate date and time associated with certain date and time from among the plurality of pieces of the service candidate date and time 65 included in the candidate date and time calculation table 61 indicates a "first candidate", a "second candidate", a "third candidate", a "fourth candidate", or "non-candidate". The plurality of pieces of the service candidate date and time 65 is calculated by the candidate date and time calculating unit 45. For example, the candidate date and time calculating unit 45 sets the service candidate date and time associated with a combination of "be at home", "not used", and "presence of remaining capacity" to the "first candidate". Furthermore, the candidate date and time calculating unit 45 sets the service candidate date and time associated with a combination of "be at home", "used", and "presence of remaining capacity" to a "second candidate". The candidate date and time calculating unit 45 sets the service candidate date and time associated with a combination of "not at home", "not used", and "presence of remaining capacity" to a "third candidate". Furthermore, the candidate date and time calculating unit 45 sets the service candidate date and time associated with a combination of "not at home", "used", and "presence of remaining capacity" to a "fourth candidate". The candidate date and time calculating unit 45 sets the service candidate date and time associated with the date and time associated with "presence of remaining capacity" to "non-candidate".

The candidate date and time calculating unit 45 further decides, based on the candidate date and time calculation table 61, the plurality of pieces of first candidate date and time, the plurality of pieces of second candidate date and time, the plurality of pieces of third candidate date and time, and the plurality of pieces of fourth candidate date and time. The plurality of pieces of first candidate date and time indicates the plurality of pieces of date and time associated with the "first candidate" in the plurality of pieces of the service candidate date and time 65. Furthermore, the plurality of pieces of first candidate date and time may also be replaced by the single piece of first candidate date and time that has been associated with the "first candidate". The plurality of pieces of second candidate date and time is the date and time whose priority order is lower than that of the plurality of pieces of first candidate date and time and indicates the plurality of pieces of date and time associated with the "second candidate" in the plurality of pieces of the service candidate date and time 65. Furthermore, the plurality of pieces of second candidate date and time may also be replaced by the single piece of second candidate date and time that has been associated with the "second candidate". The plurality of pieces of third candidate date and time is the date and time whose priority order is lower than that of the plurality of pieces of second candidate date and time and indicates the plurality of pieces of date and time associated with the "third candidate" in the plurality of pieces of the service candidate date and time 65. Furthermore, the plurality of pieces of third candidate date and time may also be replaced by the single piece of third candidate date and time that has been associated with the "third candidate". The plurality of pieces of fourth candidate date and time is the date and time whose priority order is lower than that of the plurality of pieces of third candidate date and time and indicates the plurality of pieces of date and time associated with the "fourth candidate" in the plurality of pieces of the service candidate date and time 65. Furthermore, the plurality of fourth candidate date and time may also be replaced by the single piece of the fourth candidate date and time that has been associated with the "fourth candidate".

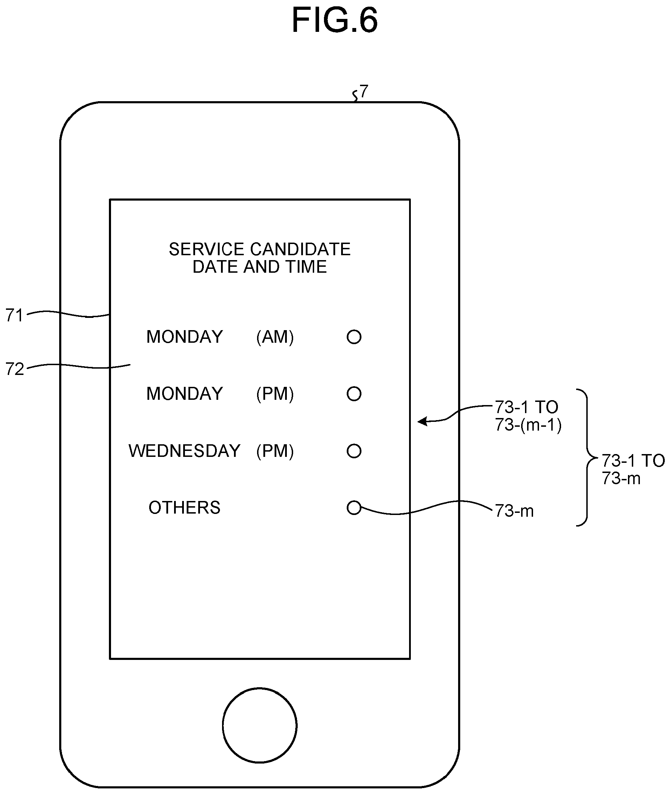

FIG. 6 is a plan view illustrating the communication terminal 7. The communication terminal 7 is an information processing apparatus exemplified as a smartphone and includes a display unit 71. When the communication terminal 7 receives the cleaning recommendation signal sent from the server device 5, the communication terminal 7 displays a message indicating that, for example, "operation time of your air conditioner exceeds 2000 hours. How about requesting a cleaning service?" on the display unit 71 (not illustrated in the drawing), and recommends to clean the air conditioner.

On the display unit 71 in the communication terminal 7, "Yes" and "No" buttons (not illustrated) are displayed during display of the above described message, and, when the user presses the "Yes" button, a first request date and time selection screen 72 indicated by the cleaning recommendation signal illustrated in FIG. 6 is displayed on the display unit 71. The first request date and time selection screen 72 includes a plurality of first selection buttons 73-1 to 73-m (m=2, 3, 4, ...). The plurality of the first selection buttons 73-1 to 73-m are vertically aligned and displayed on the first request date and time selection screen 72. The plurality of the first selection buttons 73-1 to 73-(m-1) from among the plurality of the first selection buttons 73-1 to 73-m are associated with the plurality of pieces of first candidate date and time and the plurality of pieces of second candidate date and time calculated by the candidate date and time calculating unit 45 (the date and time of the "first candidate" and the "second candidate" in the service candidate date and time 65 in FIG. 6). Regarding the first selection button associated with certain candidate date and time from among the plurality of the first selection buttons 73-1 to 73-(m-1), the candidate date and time thereof is displayed. On the first selection button 73-m, "others" is displayed. When one of the plurality of the first selection buttons 73-1 to 73-(m-1) is selected by an operation performed by the user, the communication terminal 7 sends a cleaning request signal indicating the candidate date and time associated with the selected first selection button to the server device 5 via the communication network 8 and the relay device 6.

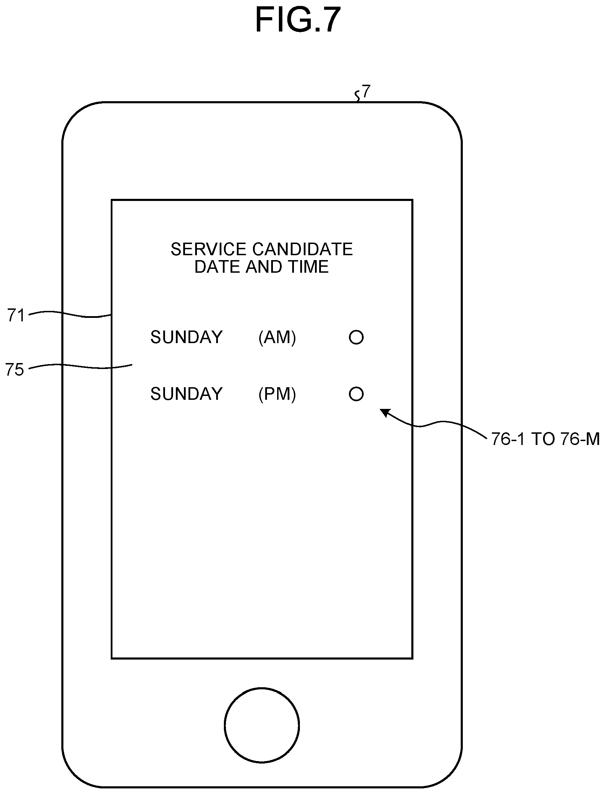

When "others" is selected by an operation performed by the user, i.e., when the first selection button 73-m is selected, the communication terminal 7 displays, as illustrated in FIG. 7, a second request date and time selection screen 75 indicated by the cleaning recommendation signal on the display unit 71. FIG. 7 is a plan view illustrating the communication terminal 7 in which the second request date and time selection screen 75 is displayed on the display unit 71. The second request date and time selection screen 75 includes a plurality of second selection buttons 76-1 to 76-M (M=2, 3, 4, ...). The plurality of the second selection buttons 76-1 to 76-M are vertically aligned and displayed on the second request date and time selection screen 75. The plurality of the second selection buttons 76-1 to 76-M is associated with the plurality of pieces of third candidate date and time and the plurality of pieces of fourth candidate date and time calculated by the candidate date and time calculating unit 45 (the date and time of the "third candidate" and the "fourth candidate" in the service candidate date and time 65 in FIG. 7). When one of the plurality of the second selection buttons 76-1 to 76-M is selected by an operation performed by the user, the communication terminal 7 sends a cleaning request signal indicating the candidate date and time associated with the selected second selection button to the server device 5 via the communication network 8 and the relay device 6.

### [Operation of the server device 5]

An operation of the server device 5 includes an operation related to AI control of the air conditioner and operation for relaying a cleaning request to the service base location.

In the operation related to the AI control of the air conditioner, the adapter 3 acquires the operation history data from the indoor unit 15 at an acquisition timing at an interval of 5 minutes, and stores the acquired operation history data in the storage unit 13. The adapter 3 sends, to the server device 5 every 48 hours, the operation state signal that includes the operation history data having an amount corresponding to 48 hours from among the plurality of pieces of operation history data stored in the storage unit 13. The operation history data sent to the server device 5 is the operation history data having an amount corresponding to 48 hours counted from the transmission time point. The server device 5 receives the plurality of pieces of operation history data sent from each of the plurality of the adapters 3 of the respective air conditioners and stores the plurality of pieces of operation history data in the storage device 32. The server device 5 generates a plurality of learning models associated with the plurality of air conditioners based on the plurality of pieces of operation history data stored in the storage device 32 and stores the plurality of learning models in the storage device 32. The server device 5 sends the plurality of learning models stored in the storage device 32 via the relay device 6 to each of the plurality of the adapters 3 of the respective air conditioners. When the adapter 3 of the air conditioner receives the learning model sent from the server device 5, the adapter 3 stores the received learning model in the storage unit 13. The adapter 3 controls the control unit 20 for the indoor unit 15 based on the learning models stored in the storage unit 13 and indirectly control the air conditioner 2 via the control unit 20.

The learning model has a sensible temperature setting prediction model that predicts, for example, a sensible temperature of the user in a room to be felt 5 minutes later in accordance with the operation state of the air conditioner in each home and that controls the air conditioner in accordance with the predicted sensible temperature. Conventionally, because the air conditioner adjusts a temperature such that an indoor temperature is set to be the target temperature, a user sometimes feels uncomfortable with the temperature change. In contrast, the sensible temperature setting prediction model is a program executed when the air conditioner is adjusted such that the user feels comfortable in accordance with the operation history data in time series about, for example, an indoor temperature, indoor humidity, an outdoor temperature, or the like. For example, because the air conditioner is controlled based on the sensible temperature setting prediction model, the set temperature of the air conditioner is changed to the temperature, which is different from the temperature set by the user, such that the user feels comfortable. According to this operation, because the air conditioner is controlled based on the learning model, the air conditioning system 1 can appropriately operate the air conditioner such that the user of the air conditioner feels comfortable.

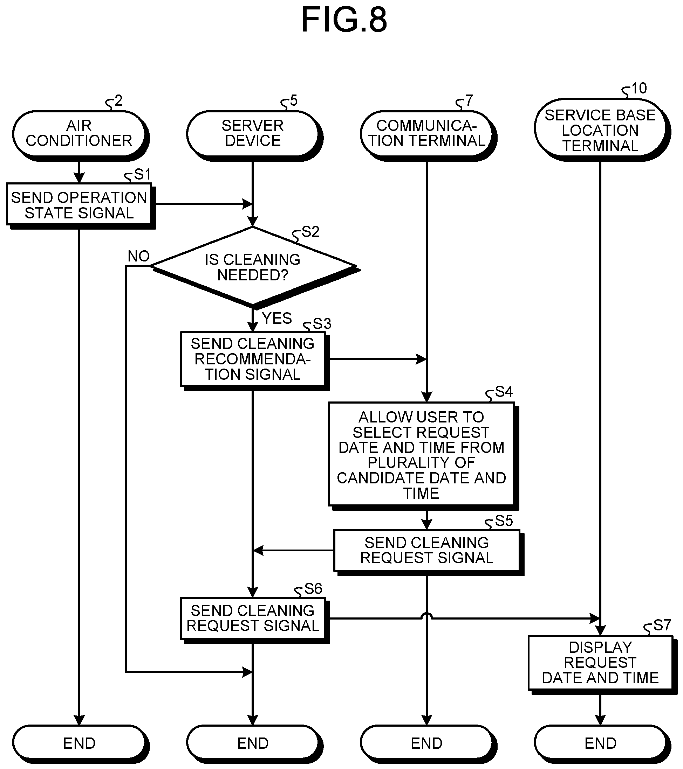

FIG. 8 is a flowchart illustrating the flow of an operation for requesting cleaning to the service base location. The adapter 3 of the air conditioner 2 sends, to the server device 5 every 48 hours, the operation state signal that includes the operation history data including an amount corresponding to 48 hours from among the plurality of pieces of operation history data stored in the storage unit 13 (Step S1). The server device 5 collectively collects the weather information every day by an amount corresponding to one week exhibited to the public from, for example, the weather information server 9, and receives a working state signal of the service base location that is intermittently (for example, every day) sent from the service base location terminal 10. When the server device 5 receives the plurality of operation state signals sent from the respective air conditioners 2, the server device 5 stores the plurality of operation state signals in the storage device 32. The server device 5 judges whether or not cleaning is needed for each of the air conditioners based on the plurality of operation state signals stored in the storage device 32 (Step S2).

For example, the server device 5 calculates a plurality of pieces of accumulated operation time associated with each of the air conditioners based on the plurality of operation state signals stored in the storage device 32. The server device 5 compares the accumulated operation time associated with the air conditioner 2 included in the plurality of pieces of accumulated operation time with the threshold that is set in advance. The server device 5 judges, when the accumulated operation time is greater than the threshold, that cleaning is needed for the air conditioner 2, and judges, when accumulated operation time is not greater than the threshold, that cleaning is not needed for the air conditioner 2.

When the server device 5 judges that cleaning is needed for the air conditioner 2 (Yes at Step S2), the server device 5 generates a cleaning recommendation signal based on the candidate date and time calculation table 61 associated with the air conditioner 2. Namely, the server device 5 generates the candidate date and time calculation table 61 for the air conditioner 2 based on the operation state signal of the air conditioner 2, the weather information, and the working state signal of the service base location. The server device 5 decides, based on the generated candidate date and time calculation table 61, the plurality of pieces of first candidate date and time, the plurality of pieces of second candidate date and time, the plurality of pieces of third candidate date and time, and the plurality of pieces of fourth candidate date and time. The server device 5 generates data related to the first request date and time selection screen 72 displayed on the communication terminal 7 based on the plurality of pieces of first candidate date and time and the plurality of pieces of second candidate date and time, and then, generates the data related to the second request date and time selection screen 75 displayed on the communication terminal 7 based on the plurality of pieces of third candidate date and time and the plurality of pieces of fourth candidate date and time. The server device 5 generates a cleaning recommendation signal by using these two pieces of data. The server device 5 sends the generated cleaning recommendation signal to the communication terminal 7 (Step S3).

When the communication terminal 7 receives the cleaning recommendation signal, the communication terminal 7 displays the above described message indicating "operation time of your air conditioner exceeds 2000 hours. How about requesting a cleaning service?" on the display unit 71, whereby the communication terminal 7 urges the user to clean the air conditioner 2, displays the first request date and time selection screen 72 illustrated in FIG. 6 on the display unit 71 in accordance with the operation performed by the user, and allows the user to select the request date and time of the cleaning from the plurality of pieces of first candidate date and time and the plurality of pieces of second candidate date and time. Alternatively, the communication terminal 7 displays the second request date and time selection screen 75 illustrated in FIG. 7 on the display unit 71, and allows the user to select the request date and time of the cleaning from the plurality of pieces of third candidate date and time and the plurality of pieces of fourth candidate date and time (Step S4). The communication terminal 7 sends the cleaning request signal indicating the request date and time selected at the time at which the request date and time has been selected to the server device 5 (Step S5). When the server device 5 receives the cleaning request signal sent from the communication terminal 7, the server device 5 transfers the cleaning request signal to the service base location terminal 10 (Step S6). Consequently, a request for cleaning of the air conditioner 2 with respect to the service base location has been completed.

When the service base location terminal 10 receives the cleaning request signal, the service base location terminal 10 stores the cleaning request signal in the storage device included in the service base location terminal 10 and displays the request date and time indicated by the cleaning request signal on the display device in the service base location terminal 10 (Step S7). The service base location provides a service for cleaning of the air conditioner 2 on the request date and time displayed on the service base location terminal 10 to the user of the air conditioner 2.

According to the operation described above, based on the date and time in which the user is presumed to be absent based on the operation state of the air conditioner 2 and based on the daily working state of the service base location, the air conditioning system 1 can notify the user of the candidate date and time in which cleaning of the air conditioner 2 can be provided. Consequently, the user can easily select the request date and time in which the air conditioner 2 is cleaned by the service base location. Furthermore, because the service base location can level off the working state, it is possible to improve operational efficiency.

Furthermore, the association relationship between the selection buttons, i.e., the plurality of the first selection buttons 73-1 to 73-m displayed on the first request date and time selection screen 72 and the plurality of the second selection buttons 76-1 to 76-M displayed on the second request date and time selection screen 75, and a plurality of pieces of first candidate date and time to the plurality of pieces of fourth candidate date and time can be replaced by another association relationship. For example, the plurality of the first selection buttons 73-1 to 73-m may also be associated with the plurality of pieces of first candidate date and time, and the plurality of the second selection buttons 76-1 to 76-M may also be associated with the plurality of pieces of second candidate date and time, the plurality of pieces of third candidate date and time, and the plurality of pieces of fourth candidate date and time. Also in this case, the air conditioning system 1 can notify, with priority, the user of the plurality of pieces of candidate date and time except for the date and time in which the user is presumed to be absent, and the user can easily select the request date and time in which the air conditioner 2 is cleaned by the service base location.

Furthermore, the air conditioning system 1 can also allow the user to select, by using three or more request date and time selection screens, the request date and time for the cleaning from among the plurality of pieces of first candidate date and time to the plurality of pieces of fourth candidate date and time. For example, the server device 5 generates data related to the first request date and time selection screen to the fourth candidate date and time selection screen associated with the plurality of pieces of first candidate date and time to the plurality of pieces of fourth candidate date and time, and then, generates a cleaning recommendation signal by using these four pieces of data. At this time, the communication terminal 7 allows the user to select, by using the first request date and time selection screen, the request date and time from among the plurality of pieces of first candidate date and time. If the request date and time is not selected from the plurality of pieces of first candidate date and time, the communication terminal 7 allows the user to select, by using the second request date and time selection screen, the request date and time from among the plurality of pieces of second candidate date and time. If the request date and time is not selected from among the plurality of pieces of second candidate date and time, the communication terminal 7 allows the user to select, by using the third request date and time selection screen, the request date and time from among the plurality of pieces of candidate date and time. If the request date and time is not selected from among the plurality of pieces of third candidate date and time, the communication terminal 7 allows the user to select, by using the fourth request date and time selection screen, the request date and time from among the plurality of pieces of fourth candidate date and time. Also in this case, the air conditioning system 1 can notify, with priority, the user of the plurality of pieces of candidate date and time except for the date and time in which the user is presumed to be absent, and the user can easily select the request date and time in which the air conditioner 2 is cleaned by the service base location.

### [Effects of the service proposal period adjusting device according to the embodiment]

The server device 5 that is the service proposal period adjusting device according to the embodiment is connected to the air conditioner 2 that cools and heats inside a room and is connected to the service base location terminal 10 that is installed in the service base location that provides a service for the air conditioner 2. The server device 5 includes the operation state collecting unit 41, the candidate date and time calculating unit 45, the sending unit 46, and the cleaning requesting unit 47. The operation state collecting unit 41 collects operation state signals from the air conditioner 2 that cools and heats inside the room. The candidate date and time calculating unit 45 decides the plurality of pieces of candidate date and time based on the operation state signals. The sending unit 46 sends the cleaning recommendation signal indicating the plurality of pieces of candidate date and time to the communication terminal 7**.** The cleaning requesting unit 47 sends, to the service base location terminal 10, the request date and time selected by the communication terminal 7 from among the plurality of pieces of candidate date and time. Whether or not the user is at home can be presumed based on the operation state of the air conditioner 2. The server device 5 can notify the user of the date and time by excluding the date and time in which the user is absent based on the operation state of the air conditioner 2 from the plurality of pieces of candidate date and time, and it is thus possible to reduce the number of plurality of pieces of candidate date and time. Because the number of plurality of pieces of candidate date and time is reduced, the server device 5 can allow the user to easily select the request date and time in which the air conditioner 2 is cleaned by the service base location from among the plurality of pieces of candidate date and time. Furthermore, the server device 5 calculates an appropriate timing of the cleaning of the air conditioner 2 by using the operation state signal that is used by AI control of the air conditioner. Consequently, the server device 5 does not need to collect a signal other than the operation state signal of the AI control from the air conditioner 2 in order to calculate a cleaning timing of the air conditioner 2, whereby it is possible to suppress an increase in communication traffic between the server device 5 and the air conditioner 2**.**

Furthermore, in the service base location terminal 10 connected to the service proposal period adjusting device according to the embodiment, the working state signals based on the working state of the service base location are stored. The server device 5 further includes the working state collecting unit 44 that collects the working state signals from the service base location terminal 10. The candidate date and time calculating unit 45 decides the plurality of pieces of candidate date and time based on the working state signals in addition to the operation state signals. The server device 5 can recommend the time zone in which remaining capacity is present in the service base location, and it is thus possible to level off the working rate of the service base location.

Incidentally, the candidate date and time calculating unit 45 included in the service proposal period adjusting device according to the embodiment decides the plurality of pieces of candidate date and time based on the working state of the service base location; however, the plurality of pieces of candidate date and time may also be decided regardless of the working state of the service base location. Also in this case, the server device 5 can reduce the number of plurality of pieces of candidate date and time by excluding the date and time of absence presumed based on the operation state of the air conditioner 2 from the plurality of pieces of date and time, and can allow the user to easily select the request date and time.

Furthermore, the air conditioner 2 connected to the service proposal period adjusting device according to the embodiment includes the human detection sensor 18. The operation state signal includes the detection result obtained by the human detection sensor 18. At this time, the candidate date and time calculating unit 45 further decides the plurality of pieces of candidate date and time based on the detection result obtained by the human detection sensor 18. Whether or not the user is at home can be presumed with high accuracy based on the detection result obtained by the human detection sensor 18 included in the air conditioner 2. The service proposal period adjusting device can appropriately include the time zone in which the user is at home into the candidate date and time by deciding the plurality of pieces of candidate date and time based on the detection result obtained by the human detection sensor 18 and can allow the user to easily select the request date and time.

Furthermore, the operation state signal in the service proposal period adjusting device according to the embodiment includes an operation state of the remote controller 19 that operates the air conditioner 2. The candidate date and time calculating unit 45 decides the plurality of pieces of candidate date and time further based on the operation state of the remote controller 19. Whether or not the user is at home can be presumed with high accuracy based on whether or not the remote controller 19 in the air conditioner 2 is operated. The service proposal period adjusting device can appropriately include the time zone in which the user is at home into the candidate date and time by deciding the plurality of pieces of candidate date and time based on the operation state of the remote controller 19, and can allow the user to easily select the request date and time.

Furthermore, the server device 5 corresponding to the service proposal period adjusting device according to the embodiment further includes the weather information collecting unit 43 that collects weather information in the region in which the air conditioner 2 is arranged from the weather information server 9. At this time, the candidate date and time calculating unit 45 decides the plurality of pieces of candidate date and time further based on the weather information. Whether or not the user uses the air conditioner 2 can be presumed with high accuracy based on the weather information. The service proposal period adjusting device can exclude the time zone in which the air conditioner 2 is used from the plurality of pieces of candidate date and time and can reduce an uncomfortable feeling of the user due to unavailability of the air conditioner 2 caused by cleaning.

Incidentally, the service proposal period adjusting device according to the embodiment decides the plurality of pieces of candidate date and time based on the weather information; however, it may also be possible to decide the plurality of pieces of candidate date and time regardless of the weather information. Also in this case, the server device 5 can reduce the number of pieces of the plurality of pieces of candidate date and time by excluding the date and time of absence that is presumed based on the operation state of the air conditioner 2 from among the plurality of pieces of candidate date and time, and can allow the user to easily select the request date and time.

Furthermore, in the embodiment described above, the plurality of pieces of candidate date and time is decided by the server device 5; however, the candidate date and time may also be decided by the relay device 6. Also in this case, the air conditioning system 1 can reduce the number of pieces of the plurality of pieces of candidate date and time by excluding the date and time of absence that is presumed based on the operation state of the air conditioner 2 from the plurality of pieces of candidate date and time, and can allow the user to easily select the request date and time.

Furthermore, in the embodiment described above, the server device 5 calculates the accumulated operation time; however, the air conditioner 2 may also calculate the accumulated operation time. Furthermore, the server device 5 judges the magnitude between the threshold and the accumulated operation time; however, the air conditioner 2 may also judge the magnitude between the threshold and the accumulated operation time. Also in this case, the air conditioning system 1 can recommend the service to the user of the air conditioner 2 at an appropriate timing.

Furthermore, the air conditioning system 1 generates the learning model such that the server device 5 allows AI to perform learning based on the operation history data collected from the air conditioner and the operation of the air conditioner is controlled based on the generated learning model; however, the control performed by using AI may also be omitted. Even in a case in which the control performed by using AI has been omitted, the server device 5 can reduce the number of pieces of the plurality of pieces of candidate date and time by excluding the date and time of absence that is presumed based on the operation state of the air conditioner 2 from the plurality of pieces of candidate date and time, and can allow the user to easily select the request date and time.

As described above, the embodiment has been described; however, the embodiment is not limited by the described content. Furthermore, the components described above includes one that can easily be thought of by those skilled in the art, one that is substantially the same, one that is within the so-called equivalents. Furthermore, the components described above may also be appropriately used in combination.

### Reference Signs List

- 1: :air conditioning system

- 2: :air conditioner
- 5: :server device
- 7: :communication terminal
- 9: :weather information server
- 10: :service base location terminal
- 41: :operation state collecting unit
- 42: :judging unit
- 43: :weather information collecting unit
- 44: :working state collecting unit
- 45: :candidate date and time calculating unit
- 46: :sending unit
- 47: :cleaning requesting unit

## Claims

1. A service proposal period adjusting device (5) that is connected to an air conditioner (2) and a service base location terminal (10) that is installed in a service base location that provides a service to the air conditioner (2), the service proposal period adjusting device (5) comprising:
an operation state collecting unit (41) that collects an operation state signal from the air conditioner (2), the operation state signal indicating an operation state of the air conditioner (2);
a weather information collecting unit (43) that collects weather information about a region in which the air conditioner (2) is arranged from a weather information server (9);
a working state collecting unit (44) that collects a working state signal from the service base location terminal (10), the working state signal indicating a working state of the service base location terminal (10); a sending unit (46) that sends a cleaning recommendation signal based on a plurality of pieces of candidate date and time to a communication terminal (7); and a requesting unit (47) that sends request date and time selected by the communication terminal (7) from among the plurality of pieces of candidate date and time to the service base location terminal (10), **characterised in that**:
a candidate date and time calculating unit (45) that presumes an at-home state which indicates whether or not a user of the air conditioner (2) is at home based on the operation state signal, wherein the candidate date and time calculating unit (45) presumes that the user is at home, when the operation state signal indicates that the air conditioner is operating and presumes that the user is not at home, when the operation state signal indicates that the operation of the air conditioner is stopped, presumes a use state which indicates whether or not the user of the air conditioner (2) is going to use the air conditioner (2) based on the weather information, wherein the candidate date and time calculating unit (45) presumes that the user is going to use the air conditioner (2) on a certain date and time when the weather information indicates that the temperature on the certain date and time is within a predetermined temperature range, and presumes that the user is not going to use the air conditioner (2) on the certain date and time when the weather information indicates that the temperature on the certain date and time is not within a predetermined temperature range, and decides the plurality of pieces of candidate date and time at which the service is provided based on the at-home state, the use state and the working state, wherein
when, for a candidate date and time, it is presumed by the candidate date and time calculating unit (45) that the user is at home, the user is not going to use the air conditioner (2) on the certain date and time, and the working state signal indicates that the service base location terminal is working, the candidate date and time calculating unit (45) sets the candidate date and time as a first candidate having a first priority;
when, for a candidate date and time, it is presumed by the candidate date and time calculating unit (45) that the user is at home, the user is going to use the air conditioner (2) on the certain date and time, and the working state signal indicates that the service base location terminal is working, the candidate date and time calculating unit (45) sets the candidate date and time as a second candidate having a second priority lower than the first priority;
when, for a candidate date and time, it is presumed by the candidate date and time calculating unit (45) that the user is not at home, the user is not going to use the air conditioner (2) on the certain date and time, and the working state signal indicates that the service base location terminal is working, the candidate date and time calculating unit (45) sets the candidate date and time as a third candidate having a third priority lower than the second priority; and
when, for a candidate date and time, it is presumed by the candidate date and time calculating unit (45) that the user is not at home, the user is going to use the air conditioner (2) on the certain date and time, and the working state signal indicates that the service base location terminal is working, the candidate date and time calculating unit (45) sets the candidate date and time as a fourth candidate having a fourth priority lower than the third priority. candidate date and time to the service base location terminal (10).

2. The service proposal period adjusting device according to claim 1, wherein
the air conditioner includes a human detection sensor (18), and
the operation state signal includes a detection result obtained by the human detection sensor (18).

3. The service proposal period adjusting device (5) according to claim 1, wherein the operation state signal further includes an operation state of an input device (19) that operates the air conditioner (2).

4. The service proposal period adjusting device according to claim 1, wherein a candidate date and time calculating unit (45) assigns priority order to the plurality of pieces of candidate date and time based on the at-home state, the use state and the working state.

5. An air conditioning system (1) comprising:
the service proposal period adjusting device (5) according to claim 1;
the air conditioner (2); and
the communication terminal (7).

## Patentansprüche

1. Dienstvorschlagperiodenanpassungseinrichtung (5), die mit einer Klimaanlage (2) und einem Dienstbasisstandortendgerät (10), das an einem Dienstbasisstandort installiert ist, der einen Dienst für die Klimaanlage (2) bereitstellt, verbunden ist, wobei die Dienstvorschlagperiodenanpassungseinrichtung (5) aufweist:
eine Operationszustandssammeleinheit (41), die ein Operationszustandssignal von der Klimaanlage (2) sammelt, wobei das Operationszustandssignal einen Operationszustand der Klimaanlage (2) angibt;
eine Wetterinformationssammeleinheit (43), die Wetterinformationen über eine Region, in der die Klimaanlage (2) angeordnet ist, von einem Wetterinformationsserver (9) sammelt;
eine Arbeitszustandssammeleinheit **(44),** die ein Arbeitszustandssignal vom Dienstbasisstandortendgerät (10) sammelt, wobei das Arbeitszustandssignal einen Arbeitszustand des Dienstbasisstandortendgeräts (10) angibt;
eine Sendeeinheit (46), die ein Reinigungsempfehlungssignal basierend auf einer Vielzahl von Elementen von Datums- und Zeitoptionen an ein Kommunikationsendgerät (7) sendet; und
eine Anfrageeinheit (47), die ein Anfragedatum und eine Anfragezeit, die vom Kommunikationsendgerät (7) aus der Vielzahl von Elementen von Datums- und Zeitoptionen auswählt werden, an das Dienstbasisstandortendgerät (10) sendet; **gekennzeichnet durch**:
eine Datums- und Zeitoptionenberechnungseinheit (45), die einen Zuhausezustand annimmt, der angibt, ob sich ein Benutzer der Klimaanlage (2) zu Hause befindet oder nicht, basierend auf dem Operationszustandssignal, wobei die Datums- und Zeitoptionenberechnungseinheit (45) annimmt, dass der Benutzer zu Hause ist, wenn das Operationszustandssignal angibt, dass die Klimaanlage arbeitet, und annimmt, dass der Benutzer nicht zu Hause ist, wenn das Operationszustandssignal angibt, dass die Operation der Klimaanlage gestoppt ist, einen Verwendungszustand annimmt, der angibt, ob der Benutzer der Klimaanlage (2) die Klimaanlage (2) verwenden wird oder nicht, basierend auf den Wetterinformationen, wobei die Datums- und Zeitoptionenberechnungseinheit (45) annimmt, dass der Benutzer die Klimaanlage (2) an einem bestimmten Datum und zu einer bestimmten Zeit verwenden wird, wenn die Wetterinformationen angeben, dass die Temperatur an diesem bestimmten Datum und zu dieser bestimmten Zeit innerhalb eines vorbestimmten Temperaturbereichs liegt, und annimmt, dass der Benutzer die Klimaanlage (2) zu einem bestimmten Datum und einer bestimmten Zeit nicht verwenden wird, wenn die Wetterinformationen angeben, dass die Temperatur zu diesem bestimmten Datum und dieser bestimmten Zeit nicht innerhalb eines vorbestimmten Temperaturbereichs liegt, und die Vielzahl von Elementen von Datums- und Zeitoptionen, zu denen der Dienst bereitgestellt wird, basierend auf dem Zuhausezustand, dem Verwendungszustand und dem Arbeitszustand festlegt, wobei
wenn für eine Datums- und Zeitoption von der Datums- und Zeitoptionenberechnungseinheit (45) angenommen wird, dass der Benutzer zu Hause ist, der Benutzer die Klimaanlage (2) zu dem bestimmten Datum und der bestimmten Zeit nicht verwenden wird und das Arbeitszustandssignal angibt, dass das Dienstbasisstandortendgerät arbeitet, die Datums- und Zeitoptionenberechnungseinheit (45) die Datums- und Zeitoption als eine erste Option mit erster Priorität einstellt;
wenn für eine Datums- und Zeitoption von der Datums- und Zeitoptionenberechnungseinheit (45) angenommen wird, dass der Benutzer zu Hause ist, der Benutzer die Klimaanlage (2) zu dem bestimmten Datum und der bestimmten Zeit verwenden wird und das Arbeitszustandssignal angibt, dass das Dienstbasisstandortendgerät arbeitet, die Datums- und Zeitoptionenberechnungseinheit (45) die Datums- und Zeitoption als eine zweite Option mit einer zweiten Priorität, die niedriger ist als die erste Priorität, einstellt;
wenn für eine Datums- und Zeitoption von der Datums- und Zeitoptionenberechnungseinheit (45) angenommen wird, dass der Benutzer nicht zu Hause ist, der Benutzer die Klimaanlage (2) zu dem bestimmten Datum und der bestimmten Zeit nicht verwenden wird und das Arbeitszustandssignal angibt, dass das Dienstbasisstandortendgerät arbeitet, die Datums- und Zeitoptionenberechnungseinheit (45) die Datums- und Zeitoption als eine dritte Option mit einer dritten Priorität, die niedriger ist als die zweite Priorität, einstellt; und
wenn für eine Datums- und Zeitoption von der Datums- und Zeitoptionenberechnungseinheit (45) angenommen wird, dass der Benutzer nicht zu Hause ist, der Benutzer die Klimaanlage (2) zu dem bestimmten Datum und der bestimmten Zeit verwenden wird und das Arbeitszustandssignal angibt, dass das Dienstbasisstandortendgerät arbeitet, die Datums- und Zeitoptionenberechnungseinheit (45) die Datums- und Zeitoption als eine vierte Option mit einer vierten Priorität, die niedriger ist als die dritte Priorität, einstellt.

2. Dienstvorschlagperiodenanpassungseinrichtung gemäß Anspruch 1, wobei
die Klimaanlage einen Menscherfassungssensor (18) umfasst; und
das Operationszustandssignal ein vom Menscherfassungssensor (18) erhaltenes Erfassungsergebnis umfasst.

3. Dienstvorschlagperiodenanpassungseinrichtung (5) gemäß Anspruch 1, wobei das Operationszustandssignal weiterhin einen Operationszustand einer Eingabeeinrichtung (19) umfasst, die die Klimaanlage (2) bedient.

4. Dienstvorschlagperiodenanpassungseinrichtung gemäß Anspruch 1, wobei eine Datums- und Zeitoptionenberechnungseinheit (45) der Vielzahl an Elementen von Datums- und Zeitoptionen basierend auf dem Zuhausezustand, dem Verwendungszustand und dem Arbeitszustand eine Prioritätenreihenfolge zuweist.

5. Klimaanlagensystem (1), mit:
der Dienstvorschlagperiodenanpassungseinrichtung (5) gemäß Anspruch 1;
der Klimaanlage (2); und
dem Kommunikationsendgerät (7).

## Revendications

1. Dispositif d'ajustement de période de proposition d'entretien (5) qui est connecté à un climatiseur (2) et à un terminal de site d'entretien (10) qui est installé dans un site d'entretien qui délivre un service d'entretien au climatiseur (2), le dispositif de réglage de période de proposition d'entretien (5) comprenant :
une unité de collecte d'état de fonctionnement (41) qui collecte un signal d'état de fonctionnement provenant du climatiseur (2), le signal d'état de fonctionnement indiquant un état de fonctionnement du climatiseur (2) ;
une unité de collecte d'informations météorologiques (43) qui collecte des informations météorologiques relatives à une région dans laquelle le climatiseur (2) est installé à partir d'un serveur d'informations météorologiques (9) ;
une unité de collecte d'état de marche (44) qui collecte un signal d'état de marche à partir du terminal de site d'entretien (10), le signal d'état de marche indiquant un état de marche du terminal de site d'entretien (10) ; une unité d'envoi (46) qui envoie un signal de recommandation de nettoyage sur la base d'une pluralité d'éléments de date et d'heure candidates à un terminal de communication (7) ; et une unité de demande (47) qui envoie la date et l'heure de demande sélectionnées par le terminal de communication (7) parmi la pluralité de dates et d'heures candidates au terminal (10) de site d'entretien,
**caractérisé en ce que** :
une unité de calcul de date et d'heure candidates (45) qui présume un état domestique qui indique si un utilisateur du climatiseur (2) est ou non chez lui sur la base du signal d'état de fonctionnement, l'unité de calcul de date et d'heure candidates (45) présumant que l'utilisateur est chez lui lorsque le signal d'état de fonctionnement indique que le climatiseur fonctionne et présumant que l'utilisateur n'est pas chez lui, lorsque le signal d'état de fonctionnement indique que le fonctionnement du climatiseur est arrêté, présumant un état d'utilisation qui indique si l'utilisateur du climatiseur (2) va ou non utiliser le climatiseur (2) en fonction des informations météorologiques, où l'unité de calcul de la date et de l'heure candidates (45) suppose que l'utilisateur va utiliser le climatiseur (2) à une certaine date et une certaine heure lorsque les informations météorologiques indiquent que la température à ces certaines date et heure se trouve dans une plage de températures prédéterminée, et suppose que l'utilisateur ne va pas utiliser le climatiseur (2) à une certaine date et une certaine heure lorsque les informations météorologiques indiquent que la température à une certaine date et une certaine heure n'est pas dans une plage de températures prédéterminée, et décide de la pluralité d'éléments de date et d'heure candidates auxquelles le service est fourni en fonction de l'état domestique, de l'état de fonctionnement et de l'état de marche, où
lorsque, pour une date et une heure candidates, il est présumé par l'unité de calcul de date et d'heure candidates (45) que l'utilisateur est à la maison, que l'utilisateur ne va pas utiliser le climatiseur (2) à la date et à l'heure déterminées, et que le signal d'état de marche indique que le terminal de site d'entretien fonctionne, l'unité de calcul de date et d'heure candidates (45) définit la date et l'heure candidates comme des premières date et heure candidates ayant une certaine priorité ;
lorsque, pour une date et une heure candidates, il est présumé par l'unité de calcul de date et d'heure candidates (45) que l'utilisateur est à la maison, que l'utilisateur va utiliser le climatiseur (2) à la date et à l'heure déterminées, et que le signal d'état de travail indique que le terminal de site d'entretien fonctionne, l'unité de calcul de date et d'heure candidates (45) définit la date et l'heure candidates comme des deuxièmes date et heure candidates ayant une deuxième priorité inférieure à la première priorité ;
lorsque, pour une date et une heure candidates, il est présumé par l'unité de calcul de date et d'heure candidates (45) que l'utilisateur n'est pas à la maison, que l'utilisateur ne va pas utiliser le climatiseur (2) à la date et à l'heure déterminées, et que le signal d'état de travail indique que le terminal de site d'entretien fonctionne, l'unité de calcul de date et d'heure candidates (45) définit la date et l'heure candidates comme des troisièmes date et heure candidates ayant une troisième priorité inférieure à la deuxième priorité ; et
lorsque, pour une date et une heure candidates, il est présumé par l'unité de calcul de date et d'heure candidates (45) que l'utilisateur n'est pas à la maison, que l'utilisateur va utiliser le climatiseur (2) à la date et à l'heure déterminées, et que le signal d'état de travail indique que le terminal de site d'entretien fonctionne, l'unité de calcul de date et d'heure candidates (45) définit la date et l'heure candidates comme des quatrièmes date et heure candidates ayant une quatrième priorité inférieure à la troisième priorité ;
d'une date et d'une heure candidates au terminal de site d'entretien (10).

2. Dispositif d'ajustement de période de proposition d'entretien selon la revendication 1, dans lequel
le climatiseur comprend un capteur de détection de présence humaine (18), et
le signal d'état de fonctionnement comprend un résultat de détection obtenu par le capteur de détection de présence humaine (18).

3. Dispositif d'ajustement de période de proposition d'entretien (5) selon la revendication 1, dans lequel le signal d'état de fonctionnement comprend en outre un état de fonctionnement d'un dispositif d'entrée (19) qui actionne le climatiseur (2).

4. Dispositif d'ajustement de période de proposition d'entretien selon la revendication 1, dans lequel une unité de calcul de date et d'heure candidates (45) attribue un ordre de priorité à la pluralité d'éléments de date et d'heure candidates sur la base de l'état domestique, de l'état d'utilisation et de l'état de marche.

5. Système de climatisation (1) comprenant :
le dispositif d'ajustement de période de proposition d'entretien (5) selon la revendication 1 ;
le climatiseur (2) ; et
le terminal de communication (7).
